# EUROPÄISCHE PATENTSCHRIFT

(11) **EP 1 319 963 B1**
(45) Veröffentlichungstag und Bekanntmachung des Hinweises auf die Patenterteilung: **20.02.2008**
(21) Anmeldenummer: 01129929.4
(22) Anmeldetag: 17.12.2001
(51) Int. Cl.: G01T 1/29

(54) **Vorrichtung und Verfahren zum Auslesen von in einem Speicherleuchtstoff abgespeicherten Informationen**
Method and device for reading out stored data from a storage phosphor
Méthode et dispositif pour la lecture de données stockées dans une substance luminescente

(43) Veröffentlichungstag der Anmeldung: 18.06.2003
(73) Patentinhaber: Agfa-Gevaert HealthCare GmbH, 51373 Leverkusen (DE)
(72) Erfinder: Gebele, Herbert, 82054 Sauerlach (DE); Müller, Jürgen, 81545 München (DE); Fasbender, Robert, 85521 Ottobrunn (DE)

(56) Entgegenhaltungen:
- EP-A- 1 130 417
- WO-A-99/28765
- US-A- 4 851 678

## Beschreibung

Die vorliegende Erfindung betrifft eine Vorrichtung und ein Verfahren zum Auslesen von in einem Speicherleuchtstoff abgespeicherten Informationen gemäß den Oberbegriffen der Ansprüche 1 und 4 bzw. 23 und 24.

Insbesondere für medizinische Zwecke wird von einem Objekt, beispielsweise einem Patienten, mittels einer Röntgenstrahlung ein Bild erzeugt, das in einem Speicherleuchtstoff als latentes Bild abgespeichert wird. Zum Auslesen des in dem Speicherleuchtstoff abgespeicherten Röntgenstrahlenbildes wird der Speicherleuchtstoff mittels einer Strahlungsquelle angeregt. Der Speicherleuchtstoff emittiert daraufhin aufgrund dieser Anregung Licht, das eine Intensität aufweist, die proportional ist zur Menge von in dem Speicherleuchtstoff abgespeicherter Röntgenstrahlung. Das von dem Speicherleuchtstoff ausgesandte Licht wird von einem Detektionsmittel empfangen und anschließend in elektrische Signale gewandelt, so dass das in dem Speicherleuchtstoff abgespeicherte Röntgenstrahlungsbild anschließend sichtbar gemacht werden kann. Das Röntgenstrahlungsbild kann beispielsweise direkt auf einem Monitor dargestellt oder auch auf einen fotografischen Röntgenfilm geschrieben werden.

Der Speicherleuchtstoff stellt einen hohen Dynamikbereich für die Zwischenspeicherung von Röntgeninformationen zur Verfügung. Dieser Dynamikbereich kann allerdings durch die zum Auslesen der Röntgeninformationen aus dem Speicherleuchtstoff verwendete Art des Detektionsmittels begrenzt sein. Dies macht sich inbesondere dann bemerkbar, wenn verschiedene Objekte untersucht werden sollen, für die sehr unterschiedlich große Röntgendosen erforderlich sind.

Eine Vorrichtung zum Auslesen von in einem Speicherleuchtstoff abgespeicherten Informationen ist beispielsweise aus der Patentanmeldung WO 99/28765 bekannt. Bei dieser bekannten Vorrichtung wird der Speicherleuchtstoff zeilenweise durch eine Anregungsstrahlung angeregt, die von einer Strahlungsquelle erzeugt wird. Die Strahlungsquelle kann beispielsweise eine Laserdiodenzeile sein. Das aufgrund der Anregung von dem Speicherleuchtstoff emittierte Licht wird von einem Detektionsmittel empfangen. Dazu weist dieses Detektionsmittel eine Vielzahl von strahlungsempfindlichen Flächen auf, die in einer Zeile nebeneinander angeordnet sind. Die von dem Speicherleuchtstoff emittierte Strahlung wird von den strahlungsempfindlichen Flächen empfangen. Das Detektionsmittel kann eine Charge-Coupled-Device (CCD)-Zeile sein, die eine Vielzahl von zeilenweise nebeneinander angeordneten Fotodetektoren enthält. Zum Auslesen des Speicherleuchtstoffes werden die Strahlungsquelle und das Detektionsmittel mit gleichförmiger Geschwindigkeit über den Speicherleuchtstoff geführt. Für die von den strahlungsempfindlichen Flächen während der Integrationszeit empfangene Menge von Emissionsstrahlung wird durch das Detektionsmittel eine entsprechende Anzahl von Elektronen erzeugt. Solche für die Pixel einer Zeile erzeugten Ladungen stellen somit ein Maß für die von den Pixeln einer ausgelesenen Zeile des Speicherleuchtstoffes ausgegebene Menge von Emissionsstrahlung dar.

Aus EP 1 130 417 A1 ist bekannt, die Integrationszeit der Detektorpixel insgesamt oder einzeln einzustellen. In US 4,851,678 wird ein Verfahren beschrieben, bei welchem Ausleseparameter für das Auslesen einer Speicherleuchtstoffplatte auf der Grundlage eines vorangegangenen Probeauslesens der Speicherleuchtstoffplatte eingestellt werden.

Der vorliegenden Erfindung liegt die Aufgabe zugrunde, eine gute Qualität bei der Wiedergabe von in einem Speicherleuchtstoff abgespeicherten Informationen nen unterschiedlicher Art, insbesondere unterschiedlicher Dosen, zu gewährleisten.

Diese Aufgabe wird gemäß der technischen Lehre des Anspruchs 1, 4, 23 oder des Anspruchs 24 gelöst.

Solche erfindungsgemäße Vorrichtungen oder Verfahren können insbesondere bei medizinischen Anwendungen in der Röntgentechnik oder bei der zerstörungsfreie Materialprüfung Verwendung finden. Gemäß der vorliegenden Erfindung kann die Integrationszeit, während der die strahlungsempfindlichen Flächen des Detektionsmittels Emissionsstrahlung empfangen, eingestellt werden. Alternativ oder zusätzlich ist es möglich, mehrere strahlungsempfindliche Flächen des Detektionsmittels zusammenzuschalten. Dies erfolgt insbesondere auf elektronische Weise, indem das Detektionsmittel entsprechend angesteuert wird. Es ist möglich, dem Detektionsmittel vorzugeben, welche und wieviele der strahlungsempfindlichen Flächen zusammengeschaltet werden sollen. Das Zusammenschalten der strahlungsempfindlichen Flächen bewirkt, dass beim Auslesen der strahlungsempfindlichen Flächen die von diesen zusammen empfangene Emissionsstrahlung auch zusammen in Elektronen umgewandelt wird. Dadurch wird für die zusammengeschalteten strahlungsempfindlichen Flächen ein gemeinsames elektrisches Signal mit einer Angabe über die Menge der von den zusammengeschalteten Flächen empfangenen Emissionsstrahlung erzeugt. Das Einstellen der Integrationszeit oder das Zusammenschalten von strahlungsempfindlichen Flächen erfolgt dabei erfindungsgemäß in Abhängigkeit von einer Menge von Emissionsstrahlung, die zuvor von dem Detektionsmittel empfangen wurde.

Aufgrund der Erfindung ist es vorteilhafterweise möglich, den Dynamikbereich des Detektionsmittels an die im Speicherleuchtstoff abgespeicherte Menge von Informationen anzupassen. Dadurch wird eine bessere Ausnutzung des verfügbaren Dynamikbereichs des Detektionsmittels und des Speicherleuchtstoffes bewirkt. Durch das Einstellen der Integrationszeit oder das Zusammenschalten mehrerer strahlungsempfindlicher Flächen kann insbesondere eine effektive Pixelfläche, die zum Empfangen von Emissionsstrahlung dient, eingestellt werden. Eine kurze Integrationszeit bzw. ein Nichtzusammenschalten von strahlungsempfindlichen Flächen bewirkt eine kleine effektive Pixelfläche und das Einstellen einer langen Integrationszeit oder das Zusammenschalten von strahlungsempfindlichen Flächen bewirkt eine große effektive Pixelfläche.

Durch große effektive Pixelflächen, insbesondere durch das Zusammenschalten mehrerer strahlungsempfindlicher Flächen, kann der Einfluss von Rauschquellen, insbesondere des Detektionsmittels, auf das Ausleseergebnis reduziert werden. Die Auslesequalität erhöht sich. Bei jedem Auslesen des Detektionsmittels tritt nämlich ein spezielles Ausleserauschen auf. Im Falle einer CCD als Detektionsmittel kann das Ausleserauschen insbesondere von dem Verstärker der Ausgangsstufe der CCD herrühren. Da erfindungsgemäß die von mehreren der strahlungsempfindlichen Flächen erfasste Emissionsstrahlung zusammengefasst wird, erhöht sich der Anteil der erfassten Nutzinformationen gegenüber dem Anteil des Rauschens in dem Gesamtsignal, das von den zusammengefassten strahlungsempfindlichen Flächen erzeugt wird. Gerade dann, wenn die Menge der zu detektierenden Emissionsstrahlung gering ist, ist es vorteilhaft, eine längere Integrationszeit einzustellen oder mehrere der strahlungsempfindlichen Flächen zusammenzuschalten. Sind dagegen in dem Speicherleuchtstoff viele Informationen abgespeichert, so ist auch die von dem Speicherleuchtstoff ausgegebene Menge von Emissionsstrahlung groß. Der Anteil der Nutzinformationen gegenüber dem Anteil des Rauschens ist daher in dem Gesamtsignal groß. Das Rauschen, insbesondere des Detektionsmittels, ist dann vernachlässigbar. In diesem Fall kann eine kurze Integrationszeit eingestellt werden oder auf ein Zusammenschalten der strahlungsempfindlichen Flächen verzichtet werden. Des Weiteren kann aufgrund der erfindungsgemäßen Ausgestaltung des Steuermittels ein Übersteuern des Detektionsmittels weitgehend vermieden werden, so dass der Verlust von ausgelesenen Informationen zumindest reduziert werden kann. Das Erreichen des Sättigungsbereichs des Detektionsmittels wird beim Auslesen der Informationen verhindert. Es ist allerdings vorteilhaft, beim Auslesen jeweils nahe am Sättigungsbereich des Detektionsmittels zu arbeiten, da dadurch ein guter (Nutz-) Signal-Rausch-Abstand erreicht werden kann. Durch das erfindungsgemäße effektive Vergrößern der Pixel beim Auslesen des Speicherleuchtstoffes kann des Weiteren die Auflösung der ausgelesenen Informationen bei bestimmten Anwendungen, die dies zulassen, verringert werden. Dadurch ist ein geringerer Speicherbedarf zum Abspeichern der beim Auslesen erzeugten Daten mit Informationen erforderlich. Kostengünstige Speicher können eingesetzt werden.

In einer vorteilhaften Ausgestaltung der Erfindung enthält das Steuermittel einen ersten Schwellwert, der einer bestimmten ersten Menge von Emissionsstrahlung entspricht. Mit diesem ersten Schwellwert gibt das Steuermittel vor, bei welcher Menge von zuvor empfangener Emissionsstrahlung eine bestimmte Integrationszeit eingestellt oder eine bestimmte Anzahl N₁ von strahlungsempfindlichen Flächen zusammengeschaltet werden soll. Das Erreichen oder Nichterreichen dieses ersten Schwellwertes beim Empfangen von Emissionsstrahlung durch das Detektionsmittel stellt insofern ein Kriterium für das Steuermittel dar, das zum Einstellen der Integrationszeit oder zum Zusammenschalten der strahlungsempfindlichen Flächen dient. Beim Überschreiten des ersten Schwellwertes durch die empfangene Menge von Emissionsstrahlung wird vorteilhafterweise eine kurze Integrationszeit eingestellt bzw. eine kleine, zweite Anzahl N₂ von strahlungsempfindlichen Flächen zusammengeschaltet. Beim Unterschreiten des ersten Schwellwertes stellt das Steuermittel eine zweite Integrationszeit ein, die größer ist als die erste Integrationszeit, oder schaltet die erste Anzahl N₁ von strahlungsempfindlichen Flächen zusammen, die größer ist als die zweite Anzahl N₂ von strahlungsempfindlichen Flächen. Dadurch kann auf einfache Weise ein effektives Kriterium für das Einstellen der Integrationszeit bzw. Zusammenschalten einer bestimmten Anzahl von strahlungsempfindlichen Flächen festgelegt werden.

In einer weiteren, besonders vorteilhaften Ausgestaltung ist eine Art Hysterese beim Einstellen der Integrationszeit bzw. beim Zusammenschalten der strahlungsempfindlichen Flächen festgelegt. Dazu enthält das Steuermittel einen zweiten Schwellwert, der einer bestimmten zweiten Menge von Emissionsstrahlung entspricht, die kleiner ist als die erste Menge von Emissionssstrahlung. Dadurch kann verhindert werden, dass bei einem Empfangen von Emissionsstrahlung, die sich im Bereich des ersten Schwellwertes bewegt, ein ständiges Ändern der eingestellten Integrationszeit oder der Anzahl von zusammengeschalteten strahlungsempfindlichen Flächen erfolgt. Beim Festlegen des ersten Schwellwertes soll vorteilhafterweise gewährleistet sein, dass ein Übersteuern des Detektionsmittels verhindert wird.

Bei einer besonders vorteilhaften Ausgestaltung der Erfindung kann mittels des Steuermittels sowohl die Integrationszeit eingestellt als auch ein Zusammenschalten von strahlungsempfindlichen Flächen vorgenommen werden.

Die Kriterien, wann und auf welche Weise eine bestimmte Integrationszeit eingestellt oder eine bestimmte Anzahl von strahlungsempfindlichen Flächen zusammengeschaltet werden soll, können auf verschiedene Weisen festgelegt werden. Dabei ist es möglich, eine oder auch mehrere zuvor ausgelesene Zeile(n) des Speicherleuchtstoffes hinsichtlich der von den Pixeln dieser Zeile(n) emittierten Emissionsstrahlungen zu untersuchen. Es ist beispielsweise möglich, einen oder mehrere bestimmte Pixel der untersuchten Zeile(n) festzulegen, so dass nur die von diesen Pixel ausgegebene Emissionsstrahlung für das Einstellen der Integrationszeit oder das Zusammenschalten von strahlungsempfindlichen Flächen benutzt wird. Durch diese Flexibilität kann die erfindungsgemäße Vorrichtung optimal auf verschiedene Anwendungsfälle eingestellt werden. Des Weiteren kann, je nach Anwendungsfall, ein optimales Verhältnis zwischen der Qualität beim Bestimmen der aus dem Speicherleuchtstoff ausgelesenen Informationen und dem dazu betriebenen Aufwand, insbesondere Rechenaufwand, erreicht werden.

In einer weiteren vorteilhaften Ausgestaltung der Erfindung kann neben den absoluten Mengen von Emissionsstrahlung, die von einem oder mehreren Pixel(n) des Speicherleuchtstoffes ausgegeben wurden, auch der relative Unterschied zwischen den von einem oder mehreren Pixel(n) ausgegebenen Emissionsstrahlungen verwertet werden. Als qualitativ besonders hochwertig kann vorteilhafterweise der Unterschied zwischen den von zwei oder mehreren benachbarten Pixeln des Speicherleuchtstoffes ausgegebenen Emissionsstrahlungen einer Zeile oder auch mehrerer Zeilen für die Einstellung der Integrationszeit oder das Zusammenschalten der strahlungsempfindlichen Flächen verwendet werden. Durch die so von dem Detektionsmittel empfangenen Emissionsstrahlungen eines Pixels oder mehrerer Pixel des Speicherleuchtstoffes und der bestimmten Mengen oder Mengenunterschiede kann somit eine mehr oder weniger exakte Vorhersage für die von noch auszulesenden Pixeln des Speicherleuchtstoffes ausgegebene Menge von Emissionsstrahlung getroffen werden.

Gemäß einer weiteren vorteilhaften Ausgestaltung der Erfindung werden die strahlungsempfindliche Flächen des Detektionsmittels unsymmetrisch ausgestaltet. Dadurch kann quer zur Richtung der Zeile die Menge der von dem Detektionsmittel empfangenen Emissionsstrahlung, im Vergleich zu einer symmetrischen Ausgestaltung, erhöht werden. Auf diese Weise wird ein verbesserter Signal-zu-Rausch-Abstand beim Empfangen der Informationen erreicht.

In einer besonders vorteilhaften Ausgestaltung erfolgt ein Detektieren von von dem Speicherleuchtstoff ausgegebener Emissionsstrahlung unmittelbar nach dem Abspeichern der Informationen in dem Speicherleuchtstoff. Insbesondere beim Abspeichern von Informationen in dem Speicherleuchtstoff mittels Röntgenstrahlung erfolgt nämlich unmittelbar nach diesem Abspeichern eine spontane Emission von Emissionsstrahlung, ohne dass der Speicherleuchtstoff zum Ausgeben von Emissionsstrahlung angeregt werden müßte. Diese unmittelbar nach dem Abspeichern der Informationen ausgegebene Emissionsstrahlung geht daher vorteilhafterweise nicht verloren. Die Detektion dieser Strahlung kann von dem Steuermittel zum Einstellen der Integrationszeit oder der Zusammenschaltung von strahlungsempfindlichen Flächen verwendet werden. Dadurch kann bereits eine Vorhersage im Hinblick auf die beim Auslesen des Speicherleuchtstoffes von diesem ausgegebene Menge von Emissionsstrahlung erfolgen. Diese Vorhersage kann vor allem zur Voreinstellung des Steuermittels eingesetzt werden. Das Detektieren dieser spontan nach dem Abspeichern ausgegebenen Emissionsstrahlung kann durch ein automatisches Transportieren des Detektionsmittels über den Speicherleuchtstoff unmittelbar nach dem Abspeichern erfolgen. Bei einer Verbindung der erfindungsgemäßen Vorrichtung mit einer Quelle, die zum Abspeichern der Informationen dient, kann der erfindungsgemäßen Vorrichtung von dieser Quelle eine Mitteilung über das Abspeichern der Informaitonen übermittelt werden. Diese Mitteilung kann dann direkt zum Transportieren des Detektionsmittels eingesetzt werden.

Vorteilhafterweise stellt das Steuermittel bereits vor Beginn des Auslesens des Speicherleuchtstoffes die kurze erste Integrationszeit ein oder schaltet die kleine zweite Anzahl N₂ von strahlungsempfindlichen Flächen zusammen. Dadurch kann bereits von Beginn des Auslesens des Speicherleuchtstoffes an ein Übersteuern des Detektionsmittels verhindert werden.

Weitere vorteilhafte Ausgestaltungen der Erfindung können den abhängigen Ansprüchen entnommen werden.

Im Folgenden werden die Erfindung und ihre Vorteile anhand von Ausführungsbeispielen beschrieben.

Es zeigen:
- Fig. 1: eine schematische Darstellung eines Ausführungsbeispiels einer erfindungsgemäßen Vorrichtung in Form einer Röntgenkassette,
- Fig. 2: ein Ausführungsbeispiel eines Lesekopfes zum Auslesen von in dem Speicherleuchtstoff abgespeicherten Informationen,
- Fig. 3: eine Ansicht des Lesekopfes gemäß Fig. 2 mit einer unsymmetrischen Ausgestaltung der strahlungsempfindlichen Flächen des Detektionsmittels,
- Fig. 4: eine schematische Darstellung eines Ausführungsbeispiels einer Übertragung elektrischer Signale einzelner strahlungsempfindlicher Flächen des Detektionsmittels zu einem Steuermittel,
- Fig. 5: eine schematische Darstellung eines weiteren Ausführungsbeispiels einer Übertragung elektrischer Signale von zusammengefassten strahlungsempfindlichen Flächen des Detektionsmittels zu dem Steuermittel,
- Fig. 6: eine schematische Darstellung verschiedener, aus einer Leuchtstoffplatte mittels des Lesekopfes ausgelesener Zeilen,
- Fig. 7: ein erstes Beispiel einer Messreihe mit einem Schwellwert bei der Detektion von Emissionssstrahlung, die von benachbarten Pixeln mehrerer benachbarter Zeilen der Leuchtstoffplatte ausgegeben wurde, und
- Fig. 8: ein zweites Beispiel einer Messreihe mit zwei Schwellwerten bei der Detektion von Emissionsstrahlung, die von benachbarten Pixeln mehrerer benachbarter Zeilen der Leuchtstoffplatte ausgegeben wurde.

Im Folgenden werden für gleiche und gleich wirkende Elemente gleiche Bezugszeichen verwendet.

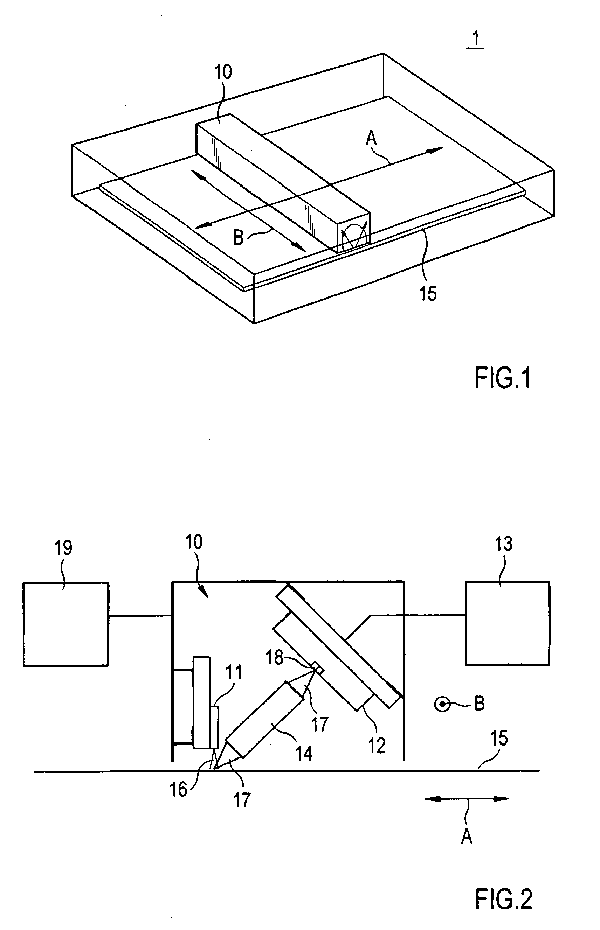

Fig. 1 zeigt eine perspektivische Ansicht einer Röntgenkassette 1, die eine Auslesevorrichtung gemäß der vorliegenden Erfindung in Form eines Lesekopfes 10 aufweist. Die Röntgenkassette 1 enthält einen Speicherleuchtstoff 15, der hier als Leuchtstoffplatte ausgestaltet ist und eine ca. 300 µm dicke Schicht aus Leuchtstoffmaterial enthält. Dieses Leuchtstoffmaterial kann durch Röntgenbestrahlung in einen angeregten Zustand versetzt werden. Dadurch wird in der Leuchtstoffplatte 15 ein Röntgenbild von einem Objekt abgespeichert. Die Leuchtstoffplatte 15 ist durch Bestrahlen mit einer Anregungsstrahlung, die insbesondere im roten Wellenlängenbereich liegt, so stimulierbar, dass sie eine Emissionsstrahlung ausgibt, die insbesondere im blauen oder ultravioletten Wellenlängenbereich liegt. Die Menge (Intensität) der von der stimulierten Leuchtstoffplatte 15 ausgegebenen Emissionsstrahlung ist ein Maß für die zuvor aufgenommene Menge an Röntgenstrahlung. Jeder Punkt (Pixel) der Leuchtstoffplatte 15, der zum Ausgeben der Emissionsstrahlung angeregt wurde, gibt diese Emissionsstrahlung lambertstrahlenförmig aus. Die Leuchtstoffplatte 15 stellt einen Lambert-Strahler dar. Ein solcher Lambert-Strahler emittiert Strahlung in alle Richtungen. Der Lesekopf 10 enthält eine Strahlungsquelle zum Ausgeben der Anregungsstrahlung, die zum Stimulieren der Leuchtstoffplatte 15 benutzt wird. Des Weiteren enthält der Lesekopf 10 ein Detektionsmittel zum Empfangen der von der Leuchtstoffplatte 15 ausgegebenen Emissionsstrahlung. Die Strahlungsquelle und das Detektionsmittel sind in dem Lesekopf 10 fest miteinander verbunden. Der Lesekopf 10 erstreckt sich über die gesamte Breite der Leuchtstoffplatte 15. Mittels des Lesekopfes 10 können die in einer Zeile der Leuchtstoffplatte 15 abgespeicherten Informationen gleichzeitig ausgelesen werden. Die Zeile erstreckt sich im wesentlichen über die gesamte Breite der Leuchtstoffplatte 15. Durch das Bezugszeichen B ist in der Fig. 1 die Zeilenrichtung angegeben. Der Lesekopf 10 ist durch einen in der Fig. 1 nicht dargestellten Antrieb quer zur Richtung der Zeile, d. h. in Längsrichtung der Leuchtstoffplatte 15, entlang der Richtung des Pfeiles mit dem Bezugszeichen A verschiebbar. A gibt daher die Vorschubrichtung des Lesekopfes 10 quer zur Richtung der Zeile an.

Fig. 2 zeigt einen Schnitt durch den Lesekopf 10 quer zur Zeilenrichtung B. Die Fig. 2 zeigt innerhalb des Lesekopfes 10 eine Strahlungsquelle 11 zum Anregen einer Zeile der Leuchtstoffplatte 15. Die Strahlungsquelle 11 ist hier eine Laserdiodenzeile. Die Laserdiodenzeile 11 ist so auf die Leuchtstoffplatte 15 ausgerichtet, dass die von den einzelnen Laserdioden ausgesandte Strahlung direkt auf die Leuchtstoffplatte 15 trifft. Zwischen der Laserdiodenzeile 11 und der Leuchtstoffplatte 15 kann eine Optik vorgesehen sein, die zum Fokussieren der von der Laserdiodenzeile 11 ausgegebenen Anregungsstrahlung dient. Fig. 2 zeigt des Weiteren ein Detektionsmittel 12 zum Empfangen der von der Leuchtstoffplatte 15 ausgegebenen Emissionsstrahlung während einer Integrationszeit. Im vorliegenden Ausführungsbeispiel ist das Detektionsmittel 12 als CCD-Zeile ausgebildet. Die CCD-Zeile 12 enthält eine Vielzahl von parallel in einer Zeile nebeneinander angeordneten Fotodetektoren mit lichtempfindlichen Flächen 18. Die CCD-Zeile 12 führt eine fotoelektrische Wandlung der empfangenen Lichtstrahlung durch. Zwischen der Leuchtstoffplatte 15 und der CCD-Zeile 12 ist ein Abbildungsmittel 14 angeordnet. Dieses Abbildungsmittel 14 dient zum Abbilden der von der angeregten Zeile der Leuchtstoffplatte 15 emittierten Strahlung auf die lichtempfindlichen Flächen 18 der CCD-Zeile 12. Als Abbildungsmittel 14 können beispielsweise eine Vielzahl von zeilenförmig nebeneinander angeordneten Mikrolinsen verwendet werden. Die im Betrieb von der Laserdiodenzeile 11 ausgesandte Anregungsstrahlung ist in der Fig. 2 mit dem Bezugszeichen 16 versehen. Die aufgrund der Anregung mittels der Anregungsstrahlung 16 von der Leuchtstoffplatte 15 emittierte Emissionsstrahlung ist in der Fig. 2 mit dem Bezugszeichen 17 versehen.

Die CCD-Zeile 12 ist an ihrem Ausgang mit einem Steuermittel 13 verbunden. Dieses Steuermittel 13 hat u. a. die Aufgabe, die von der CCD-Zeile 12 erzeugten elektrischen Signale, die ein Abbild der in der Leuchtstoffplatte 15 abgespeicherten Bildinformationen enthalten, auszuwerten und aufzubereiten. Darüber hinaus wird mittels des Steuermittels 13 der Vorschub des Lesekopfes 10 über die Leuchtstoffplatte 15 gesteuert. Zum Vorschub des Lesekopfes dient ein Antriebsmittel 19, das beispielsweise ein Linearmotor sein kann, mit dem der Lesekopf 10 mit gleichförmiger Geschwindigkeit über die Leuchtstoffplatte 15 transportiert wird. Damit kann ein zeilenweises Auslesen der Leuchtstoffplatte 15 erfolgen. Der Lesekopf 10 kann beispielsweise auf Gleitlagern gelagert sein, die entlang der Längsseiten der Leuchtstoffplatte 15 angebracht sind.

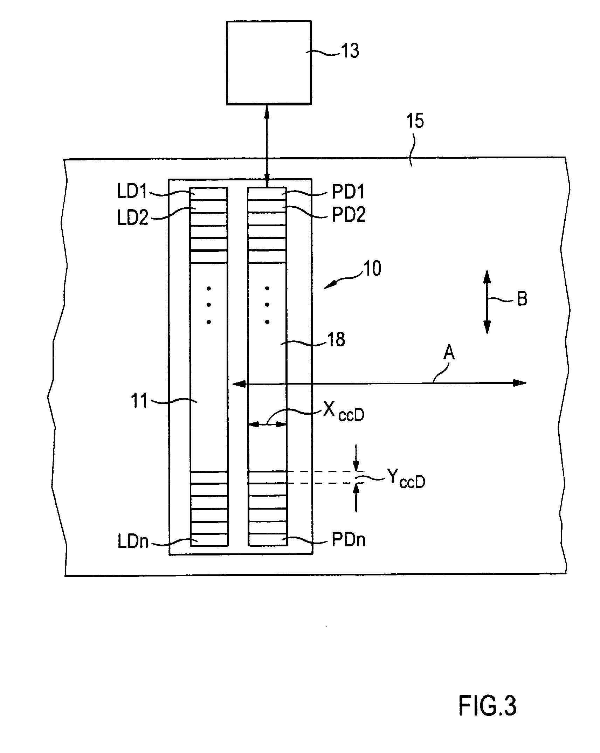

Fig. 3 zeigt eine weitere Ansicht des Lesekopfes 10 gemäß des Ausführungsbeispiels nach Fig. 2. Die Fig. 3 zeigt eine Draufsicht auf den Lesekopf 10 und die Leuchtstoffplatte 15. Es ist ein Schnitt durch die Laserdiodenzeile 11 und die CCD-Zeile 12 parallel zur Leuchtstoffplatte 15 und der Vorschubrichtung A des Lesekopfes 10 dargestellt. Die Fig. 3 zeigt eine Vielzahl von in einer Zeile nebeneinander angeordneten Laserdioden LD1 bis LDn. Mittels der Laserdioden LD1 bis LDn kann die gesamte Breite der rechteckigen Leuchtstoffplatte 15, in der Informationen abgespeichert sein können, zum Strahlen angeregt werden. Es ist möglich, die Laserstrahlung, die von den Laserdioden ausgegeben wird, über entsprechende Optiken zumindest teilweise zu überlagern, um so auch bei wenigen Laserdioden die gesamte Breite der Zeile anregen zu können.

Die Fig. 3 zeigt die lichtempfindlichen Flächen 18 der CCD-Zeile 12 (Fig. 2). Die CCD-Zeile enthält Fotodetektoren PD1 bis PDn. Jeder Fotodetektor PD1 bis PDn hat eine lichtempfindliche Fläche. Im vorliegenden Ausführungsbeispiel gemäß der Fig. 3 sind die lichtempfindlichen Flächen 18 der Fotodetektoren PD1 bis PDn unsymmetrisch ausgestaltet. Die einzelnen lichtempfindlichen Flächen 18 der Fotodetektoren PD1 bis PDn sind hier rechteckförmig ausgestaltet. Sie können aber auch z. B. elliptisch sein. In Zeilenrichtung B haben die einzelnen Fotodetektoren PD1 bis PDn lichtempfindliche Flächen mit einer Ausdehnung Y_{CCD} und in Vorschubrichtung A, d. h. quer zur Zeilenrichtung B, mit einer Ausdehnung X_{CCD}. Y_{CCD} ist kleiner als X_{CCD}. Vorteilhafterweise ist die Ausdehnung der jeweiligen lichtempfindlichen Flächen 18 quer zur Richtung B der Zeile zwei- bis achtmal so groß wie die Ausdehnung in Richtung B der Zeile. Die Ausdehnung Y_{CCD} beträgt hier etwa 50 µm und die Ausdehnung X_{CCD} etwa 400 µm. Diese Ausdehnung X_{CCD} von etwa 400 µm ist besonders vorteilhaft, da sich bei diesem Maß ein sehr gutes Verhältnis von aufgesammelter Information zu CCD-Rauschen erreichen läßt.

Durch die Bestrahlung der Leuchtstoffplatte 15 mit Röntgenstrahlung entstanden Speicherzentren innerhalb des Leuchtstoffs, in denen die auszulesenden Informationen abgespeichert sind. Aufgrund der Anregung durch die Laserdiodenzeile 11 wird in der Leuchtstoffplatte 15 eine Vielzahl von nebeneinander befindlichen Streukreisen erzeugt, aus denen heraus Strahlung an der Oberfläche der Leuchtstoffplatte 15 emittiert wird. Jeder Streukreis ist abhängig von der bestimmten Art der Leuchtstoffplatte, insbesondere von der Korngröße, den Leuchtstoffpartikeln oder der Schichtdicke des für die Leuchtstoffplatte 15 verwendeten Leuchtstoffs. Die Streukreise entstehen, da die von der Leuchtdiodenzeile 11 ausgesandte Anregungsstrahlung innerhalb der Leuchtstoffplatte 15 aufgrund der spezifischen Beschaffenheit des verwendeten Leuchtstoffs gestreut wird. Die von den verschiedenen Speicherzentren aufgrund der Anregungsstrahlung emittierte Strahlung wird innerhalb ihres Weges von dem Speicherzentrum zur Außenfläche der Leuchtstoffplatte 15 ebenfalls gestreut. Aufgrund dieser Streuungen entsteht beim Auslesen der in der Leuchtstoffplatte 15 abgespeicherten Informationen eine Unschärfe. Diese Unschärfe ist spezifisch für die Art des verwendeten Leuchtstoffs. Durch diese Unschärfe wird angegeben, dass die an einem Punkt der Leuchtstoffplatte 15 enthaltenen Informationen nicht exakt ortsgenau über diesem Punkt an der Oberfläche der Leuchtstoffplatte 15 austreten. Vielmehr treten diese Informationen, die einem bestimmten Punkt der Leuchtstoffplatte 15 zugeordnet sind, irgendwo innerhalb des diesem Punkt zugeordneten Streukreises an der Oberfläche der Leuchtstoffplatte 15 aus. Da bei der vorliegenden Auslesevorrichtung eine Zeile der Leuchtstoffplatte 15 gleichzeitig angeregt wird, erfolgt eine teilweise Überlagerung der Streukreise. Aufgrund dieser Unschärfe der Leuchtstoffplatte 15 kann ein vollkommen abrupter Übergang von einer emittierten großen Menge Emissionsstrahlung eines Pixels zu einer emittierten kleinen Menge Emissionsstrahlung eines benachbarten Pixels, oder umgekehrt, nicht erfolgen. Dies kann erfindungsgemäß zu einer zumindest teilweisen Vorhersage von beim Auslesen nachfolgender Zeilen der Leuchtstoffplatte 15 von den Pixeln dieser nachfolgenden Zeilen jeweils auszugebenden Mengen von Emissionsstrahlung eingesetzt werden.

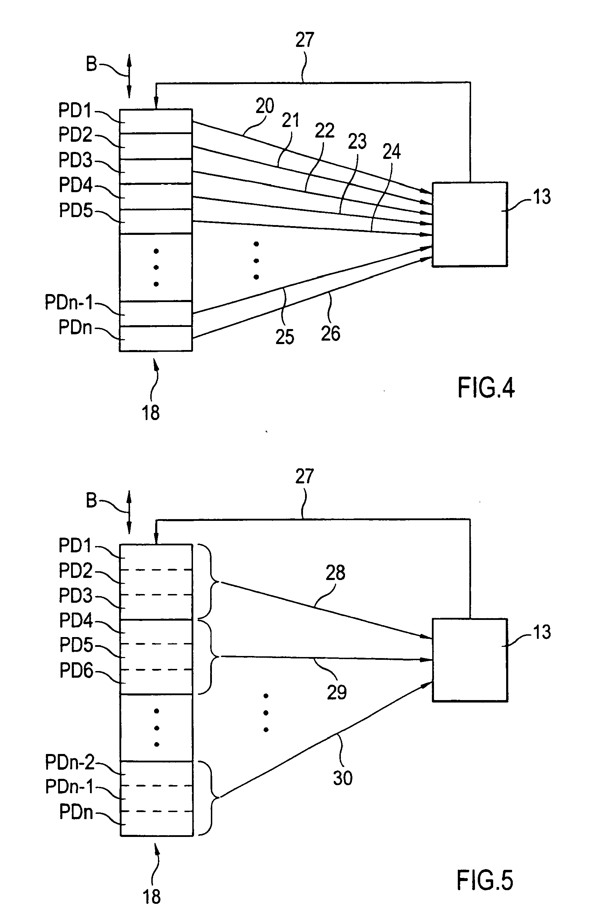

Die Fig. 4 zeigt die schematische Darstellung einer Übertragung elektrischer Signale 20-26 von den bereits in der Fig. 3 dargestellten Fotodetektoren PD1-PDn zu dem Steuermittel 13. Das Steuermittel 13 ist über eine Verbindungsleitung 27 mit den Fotodetektoren PD1-PDn verbunden. Über diese Verbindungsleitung 27 kann das Steuermittel 13 die Fotodetektoren ansteuern. Das Steuermittel 13 kann beispielsweise ein entsprechend programmierter digitaler Signalprozessor sein. Das Steuermittel 13 dient zum Einstellen der Integrationszeiten, während derer die Fotodetektoren PD1-PDn Emissionsstrahlung detektieren können. Die Vorgabe dieser Integrationszeit kann beispielsweise von dem Steuermittel 13 über die Verbindungsleitung 27 an die Fotodetektoren weitergegeben werden. Im vorliegenden Ausführungsbeispiel der Fig. 4 übermittelt jeder der Fotodetektoren PD1-PDn ein eigenes elektrisches Signal zu dem Steuermittel 13. Beispielhaft sind in der Fig. 4 die elektrischen Signale 20-26 dargestellt. Der erste Fotodetektor PD1 übermittelt das erste elektrische Signal 20, der zweite Fotodetektor PD2 das zweite Signal 21, der dritte Fotodetektor PD3 das dritte elektrische Signal 22, der vierte Fotodetektor PD4 das vierte elektrische Signal 23, der fünfte Fotodetektor PD5 das fünfte elektrische Signal 24, der vorletzte Fotodetektor PDn-1 das sechste elektrische Signal 25 und der letzte Fotodetektor PDn das siebte elektrische Signal 26 an das Steuermittel 13. Die elektrischen Signale 20-26 enthalten Angaben über die Menge der von den einzelnen Fotodetektoren PD1-PDn während der eingestellten Integrationszeit empfangenen Mengen von Emissionsstrahlung, die von der Leuchtstoffplatte 15 aufgrund der Anregung durch die Laserdioden ausgegeben wurde. Das Steuermittel 13 wertet die von den elektrischen Signalen übermittelten Angaben aus und setzt aufgrund vorgegebener Kriterien diejenige Integrationszeit fest, mit der die einzelnen Fotodetektoren PD1-PDn im weiteren Verlauf des Auslesens der Leuchtstoffplatte 15 Emissionsstrahlung empfangen sollen. Vorteilhafterweise kann nach jeder Zeile, die mittels des Lesekopfes aus der Leuchtstoffplatte 15 ausgelesen wurde, die Integrationszeit für eine nachfolgende Zeile, die noch ausgelesen werden muss, festgelegt werden. Diese nachfolgende Zeile muss nicht notwendigerweise die direkt nachfolgende Zeile sein. Vorteilhafterweise kann eine Vorhersage für die von der zweiten oder dritten nachfolgenden Zeile ausgegebenen Emissionsstrahlung gemacht werden. In dem Ausführungsbeispiel gemäß der Fig. 4 erfolgte kein Zusammenschalten von Fotodetektoren. Die Anzahl N von zusammengeschalteten Fotodetektoren beträgt daher in diesem Falle 1.

Auch in dem Fall, in dem kein Zusammenschalten von Fotodetektoren oder ein Einstellen einer kurzen Integrationszeit der strahlungsempfindlichen Flächen erfolgt, wie in dem Ausführungsbeispiel nach Fig. 4, ist es vorteilhafterweise möglich, von den einzelnen Fotodetektoren PD1-PDn mit den übermittelten elektrischen Signalen 20-26 erhaltene Angaben über die Menge der von den Fotodetektoren PD1-PDn während der eingestellten Integrationszeit empfangene Mengen von Emissionsstrahlung, in dem Steuermittel 13 zu addieren. Es können beispielsweise jeweils drei der Signale 20-26, d. h. hier die Signale 20, 21 und 23, usw., zu einem Signal zusammenaddiert werden. Damit erfolgt allerdings sowohl eine Addition der (Nutz-)Signalanteile als auch der Rauschanteile der drei addierten Signale. Aufgrund der geometrischen Addition der Rauschanteile, und damit einer Erhöhung des Rauschanteiles um √3, aber der linearen Addition der drei (Nutz-)Signalanteile, ist dennoch eine Verbesserung des (Nutz-)Signal-Rausch-Abstandes gegeben.

Fig. 5 zeigt eine schematische Darstellung einer anderen Übertragung elektrischer Signale von den Fotodetektoren PD1-PDn zu dem Steuermittel 13. In diesem Ausführungsbeispiel wurde aufgrund der Ansteuerung der einzelnen Fotodetektoren PD1-PDn über die Verbindungsleitung 27 von dem Steuermittel 13 eine Zusammenschaltung von jeweils drei Fotodetektoren veranlasst. Im vorliegenden Beispiel sind die Fotodetektoren PD1-PD3, die Fotodetektoren PD4-PD6, ... und PD(n-2)-PDn zusammengeschaltet. Die zusammengeschalteten Fotodetektoren sammeln während der vorgegebenen Integrationszeit von der Leuchtstoffplatte 15 ausgegebene Emissionsstrahlung. Die Menge der von jeweils drei Fotodetektoren empfangenen Emissionsstrahlung wird mittels eines elektrischen Signales an das Steuermittel 13 übermittelt. Im vorliegenden Fall übermitteln die Fotodetektoren PD1-PD3 das elektrische Signal 28, die Fotodetektoren PD4-PD6 das elektrische Signal 29 und die Fotodetektoren PD(n-2)-PDn das elektrische Signal 30 an das Steuermittel 13. Aufgrund der Zusammenschaltung von drei Fotodetektoren wird die so erhaltene, zusammengeschaltete (effektive) Pixellänge, mit der die drei Fotodetektoren gemeinsam Emissionsstrahlung detektieren, in Zeilenrichtung B betrachtet, verdreifacht. Beträgt daher die Ausdehnung eines Fotodetektors in Zeilenrichtung B 50 µm, so beträgt die Ausdehnung von drei zusammengeschalteten Fotodetektoren 150 µm. Die effektive Pixellänge in Vorschubrichtung A hängt von der Vorschubgeschwindigkeit des Lesekopfes über die Leuchtstoffplatte 15 und der gewählten Integrationszeit ab. Aufgrund des Zusammenschaltens von jeweils drei Fotodetektoren wird der (Nutz-)Signal-Rausch-Abstand der elektrischen Signale 28-30 gegenüber dem (Nutz-)Signal-Rausch-Abstand der elektrischen Signale 20-26 (Fig. 4) verbessert. Da gemäß dem Ausführungsbeispiel der Fig. 5 jeweils drei Fotodetektoren zusammen ausgelesen werden, tritt das Ausleserauschen, das insbesondere durch das Rauschen des Verstärkers des CCD-Chips verursacht wird, nur ein einziges Mal auf. Gleichzeitig werden die von den jeweils drei Fotodetektoren erzeugten drei Nutzsignale zusammengefasst. Demzufolge wird der (Nutz-)Signal-Rausch-Abstand gegenüber dem Nichtzusammenschalten der Fotodetektoren erhöht. Dies ist inbesondere dann sinnvoll, wenn die Menge der von den einzelnen Fotodetektoren detektierten Emissionsstrahlung, d. h. der Pegel des jeweils erzeugten Nutzsignales, niedrig ist. Aufgrund der niedrigen Menge detektierter Emissionsstrahlung ist nicht zu erwarten, dass aufgrund des Zusammenschaltens von drei Fotodetektoren eine Übersteuerung des Detektionsmittels eintritt. Dies wäre dann der Fall, wenn die drei von den drei zusammengefassten Fotodetektoren detektierten Mengen von Emissionsstrahlung in der Summe größer wären als die von dem Detektionsmittel für einen Auslesevorgang maximal detektierbare Menge von Emissionsstrahlung. Diese maximal detektierbare Menge von Emissionsstrahlung ist insbesondere durch die Größe des Ausleseregisters des Detektionsmittels (CCD) vorgegeben.

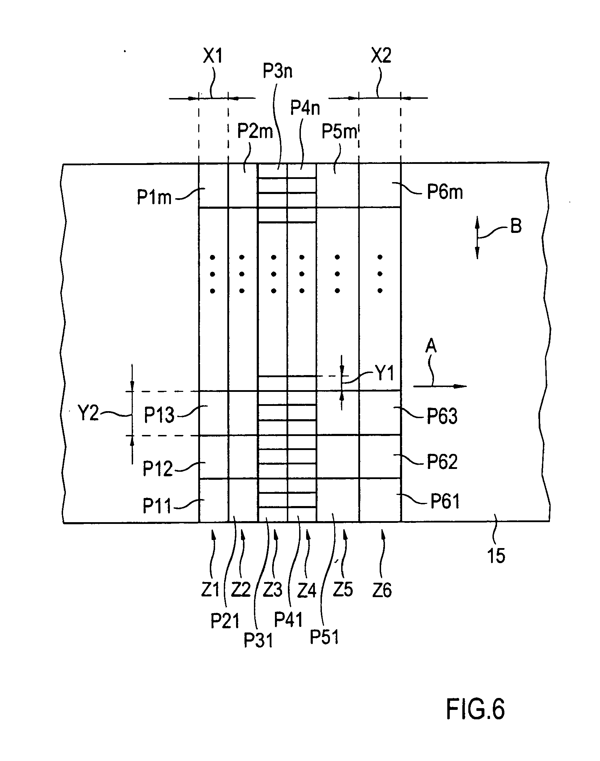

Fig. 6 zeigt die schematische Darstellung eines Teils der Leuchtstoffplatte 15, aus der sechs Zeilen Z1-Z6 mittels des Lesekopfes 13 ausgelesen wurden. Die jeweilige Ausdehnung der Zeilen Z1-Z6 in Vorschubrichtung A ergibt sich aus der jeweils eingestellten Integrationszeit beim Auslesen der Zeilen Z1-Z6 und der Vorschubgeschwindigkeit des Lesekopfes 10 beim Transport des Lesekopfes 10 über die Leuchtstoffplatte 15. Im vorliegenden Ausführungsbeispiel gemäß Fig. 6 haben die Zeilen Z1-Z4 eine Ausdehnung X1 in Vorschubrichtung A. Da die Vorschubgeschwindigkeit des Lesekopfes 10 während des Auslesens der gesamten Leuchtstoffplatte 15 weitgehend konstant bleibt, wurde beim Auslesen der Zeilen Z1-Z4 von dem Steuermittel 13 jeweils eine Integrationszeit T1 eingestellt. Die Zeilen Z5 und Z6 haben eine Ausdehnung X2 in Vorschubrichtung A des Lesekopfes 10. Diese Ausdehnung X2 ist größer als die Ausdehnung X1 der Zeilen Z1-Z4. Dies bedeutet, dass bei gleichbleibender Vorschubgeschwindigkeit des Lesekopfes 10 die Integrationszeit T2 beim jeweiligen Auslesen der Zeilen Z5 und Z6 länger gewesen ist, als die Integrationszeit T1 beim jeweiligen Auslesen der Zeilen Z1-Z4. Die effektive Pixelausdehnung ist insofern bei den Zeilen Z5 und Z6 größer als bei den Zeilen Z1-Z4.

In Zeilenrichtung B betrachtet, weisen die Zeilen Z1-Z6 jeweils eine bestimmte Anzahl von Pixeln auf. Die Zeilen Z1, Z2, Z5 und Z6 enthalten jeweils m Pixel. Die erste Zeile Z1 enthält die Pixel P11-P1m, die zweite Zeile enthält die Pixel P21-P2m, die fünfte Zeile Z5 enthält die Pixel P51-P5m und die sechste Zeile Z6 enthält die Pixel P61-P6m. Die Pixel der Zeilen Z1, Z2, Z5 und Z6 haben jeweils eine Ausdehnung Y2 in Zeilenrichtung B. Die Zeilen Z3 und Z4 enthalten n Pixel. Die dritte Zeile Z3 enthält die Pixel P31-P3n und die vierte Zeile Z4 enthält die Pixel P41-P4n. Die Pixel der Zeilen Z3 und Z4 haben jeweils eine Ausdehnung Y1 in Zeilenrichtung B. Y1 ist dabei kleiner als die Ausdehnung Y2. Die effektive Pixelausdehnung Y1 der Pixel der Zeilen Z3 und Z4 entspricht im Wesentlichen der Ausdehnung Y_{CCD} der Fotodetektoren PD1-PDn des Lesekopfes 10. Beim Auslesen der Zeilen Z3 und Z4 wurden die einzelnen Fotodetektoren nicht zusammengeschaltet. Jeder Fotodetektor hat ein eigenes elektrisches Signal an das Steuermittel 13 übermittelt, mit dem die von ihm empfangene Menge von Emissionsstrahlung übermittelt wurde. Da beim Auslesen der Zeilen Z3 und Z4 die Fotodetektoren PD1-PDn nicht zusammengeschaltet wurden, haben die Zeilen Z3 und Z4 entsprechend der Anzahl von Fotodetektoren jeweils n Pixel.

Im Falle der Zeilen Z1, Z2, Z5 und Z6 ist die Ausdehnung Y2 in Zeilenrichtung B größer als bei den Zeilen Z3 und Z4. Beim Auslesen der Zeilen Z1, Z2, Z5 und Z6 wurden, wie bereits in der Fig. 5 dargestellt, jeweils drei Fotodetektoren zusammengeschaltet. Die effektive Pixelausdehnung Y2 in Zeilenrichtung B ist daher in etwa dreimal so groß wie die Ausdehnung Y1 der Pixel der Zeilen Z3 und Z4. Da beim Auslesen der Zeilen Z1, Z2, Z5 und Z6 jeweils drei der Fotodetektoren PD1-Pdn zusammengeschaltet wurden, beträgt die Anzahl m der Pixel dieser Zeilen nur ein Drittel der Anzahl n der Pixel der Zeilen Z3 und Z4.

Das Einstellen der jeweiligen Integrationszeiten P1 und P2 sowie das Zusammenschalten von Fotodetektoren beim Auslesen der jeweiligen Zeilen der Leuchtstoffplatte 15 erfolgt auf der Grundlage von einer oder mehreren zuvor ausgelesenen Zeile(n) der Leuchtstoffplatte 15. Beispielsweise kann das Einstellen der Integrationszeit T1 und das Nichtzusammenschalten der Fotodetektoren beim Auslesen der Zeile Z3 auf der Grundlage der von den Zeilen Z1 und/oder Z2 ausgegebenen und von den Fotodetektoren empfangenen Emissionsstrahlungen erfolgen. Aufgrund der Auswertung der von den verschiedenen Pixeln der Zeilen Z1 und/oder Z2 ausgegebenen und von den Fotodetektoren bei dem Auslesen dieser Zeilen Z1 bzw. Z2 empfangenen Emissionsstrahlungen wurde beispielsweise festgestellt, dass für die Zeile Z3 eine höhere auszugebende Emissionsstrahlung zu erwarten ist. Um eine Übersteuerung des Detektionsmittels 12 zu vermeiden, wurde durch das Steuermittel 13 die beim Auslesen der Zeilen Z1 und Z2 erfolgte Zusammenschaltung der Fotodetektoren für das Auslesen der Zeile Z3 wieder rückgängig gemacht.

Beim Auslesen der Zeile Z5 dagegen wurden die Fotodetektoren erneut zusammengeschaltet. Darüber hinaus wurde die Integrationszeit gegenüber dem Auslesen der Zeilen Z1-Z4 verlängert. Dies kann z. B. darauf beruhen, dass beim Auslesen der Zeilen Z3 und/oder Z4 aufgrund der dabei detektierten Emissionsstrahlungen vorhergesagt werden konnte, dass beim Auslesen der Zeile Z5 eine wesentlich geringere Menge von Emissionsstrahlung empfangen werden wird. Das Einstellen der Integrationszeit oder die Entscheidung, ob und wieviele der Fotodetektoren zusammengeschaltet werden, kann aufgrund unterschiedlicher Kriterien erfolgen. Diese können je nach Anwendungsfall unterschiedlich ausgewählt werden. Insbesondere können eine oder mehrere vorher ausgelesene Zeile(n) berücksichtigt werden. Weiterhin können ein oder mehrere, insbesondere alle Pixel der zuvor ausgelesenen Zeilen von dem Steuermittel 13 berücksichtigt werden. Auch Unterschiede beim Ausgeben von Emissionsstrahlungen von benachbarten Pixeln einer oder mehrerer Zeile(n) sind ein geeignetes Kriterium zum Einstellen der Integrationszeit und/oder dem Zusammenschalten von Fotodetektoren.

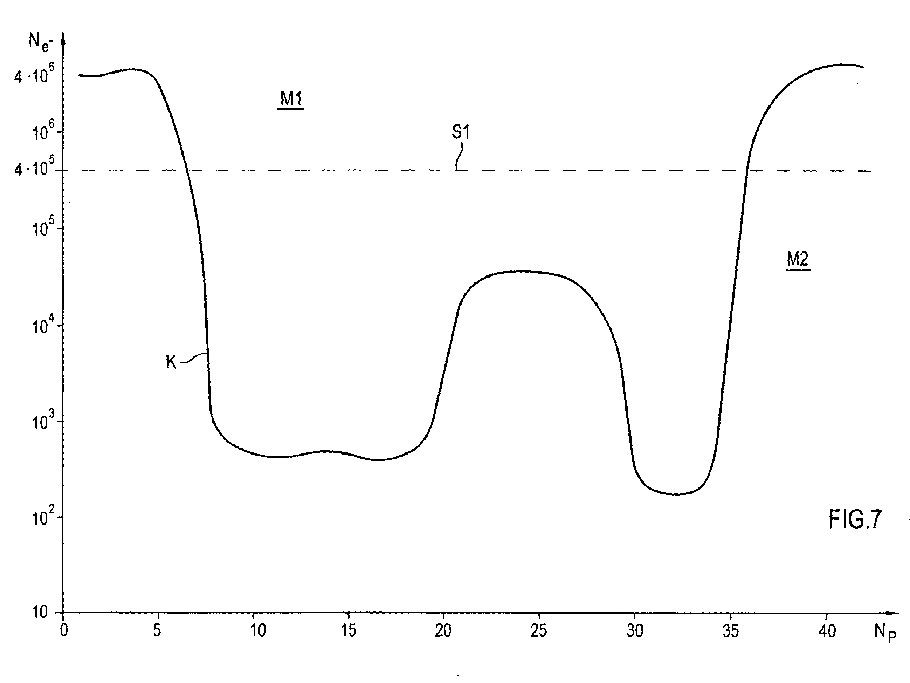

Fig. 7 zeigt ein erstes Beispiel einer Messreihe K, das die Funktionsweise der Erfindung weiter verdeutlichen soll. Auf der Abzisse ist das jeweils gleiche Pixel mehrerer benachbarter Zeilen N_{P} der Leuchtstoffplatte 15 aufgetragen. Auf der Ordinate ist die Anzahl Nₑ- von Elektronen aufgetragen, die von dem Detektionsmittel 12 aufgrund des Detektierens der von den Pixeln der verschiedenen Zeilen empfangenen Mengen von Emissionsstrahlung erzeugt wurde. Die Anzahl der Elektronen ist auf der Ordinate in logarithmischem Maßstab aufgetragen. Aufgrund der von dem Pixel der Zeile N_{P}=1 detektierten Emissionsstrahlung wurden beispielsweise bei der Messreihe gemäß der Fig. 7 in etwa 4x10⁶ Elektronen erzeugt. Gleiches gilt für das gleiche Pixel der Zeile N_{P}=2. Bei dem Pixel der Zeile 3 wurde eine geringfügig erhöhte Anzahl von Elektronen von dem Detektionsmittel 12 erzeugt. Bei einem Pixel der Reihe 7 beträgt die Anzahl der Elektronen etwa nur noch 8x10⁴. Anschließend reduziert sich die Anzahl der erzeugten Elektronen weiter sehr stark. Bei einem Pixel der Zeile 8 beträgt die Anzahl der erzeugten Elektronen beispielsweise nur noch 8x10², usw.. Die restlichen Daten lassen sich der Fig. 7 entnehmen. In der Fig. 7 ist eine erste Schwelle S1 bei einer Anzahl von Elektronen von 4x10⁵ bezeichnet. Diese erste Schwelle S1 dient dem Steuermittel 13 dazu, eine erste, kurze Integrationszeit oder eine zweite, lange Integrationszeit einzustellen. In einem ersten Modus M1, der in der Fig. 7 oberhalb des ersten Schwellwertes S1 dargestellt ist, wird die erste, kurze Integrationszeit eingestellt. In diesem Modus M1 liegt die Anzahl der von dem Detektionsmittel 12 generierten Elektronen oberhalb des ersten Schwellwertes S1. Bei einem zweiten Modus M2, der sich unterhalb des ersten Schwellwertes S1 befindet und bei dem mittels des Steuermittels 13 die zweite, längere Integrationszeit eingestellt wird, wird jeweils eine Anzahl von Elektronen von dem Detektionsmittel 12 generiert, die unterhalb der ersten Schwelle S1 liegt.

Wird daher z. B. als Kriterium für das Einstellen der Integrationszeit für eine der Zeilen jeweils ein bestimmtes Pixel der vorhergehenden Zeile verwendet, so ergibt sich gemäß dem Ausführungsbeispiel der Fig. 7, dass beim Auslesen des Pixels der Zeile 6 eine Anzahl von Elektronen generiert wurde, die oberhalb der Schwelle S1 liegt. Für das Auslesen des Pixels der Zeile 7 wird daher die erste, kurze Integrationszeit eingestellt. Allerdings ergibt sich nun, dass die beim Auslesen des Pixels der Zeile 7 generierte Anzahl von Elektronen unterhalb der Schwelle S1 liegt. Daher wird von dem Steuermittel 13 für das Auslesen der folgenden Zeile 8 die Integrationszeit auf die zweite, längere Integrationszeit eingestellt. Diese zweite Integrationszeit bleibt bis zum Detektieren der Emissionsstrahlung des Pixels der Zeile 36 erhalten. Beim Detektieren dieser Emissionsstrahlung wird erneut eine Anzahl von Elektronen detektiert, die oberhalb des Schwellwertes S1 liegt. Das Steuermittel 13 stellt daher für das Auslesen des Pixels der Zeile 37 die erste, kurze Integrationszeit ein.

Das Ausführungsbeispiel der Fig. 7 zeigt das Einstellen der Integrationszeit bei Vorliegen eines Schwellwertes S1. Die gleiche Vorgehensweise, die hier anhand des Einstellens der Integrationszeit beschrieben wurde, kann auch für das Zusammenschalten der Fotodetektoren verwendet werden. Im Modus M1 werden entweder keine oder nur eine geringe Anzahl N₂ von Fotodetektoren zusammengeschaltet. Im Modus M2 hingegen wird eine größere Anzahl N₁ von Fotodetektoren als im Modus M1 zusammengeschaltet.

Anstelle der absoluten Anzahl von zuvor generierten Elektronen ist es ebenso möglich, das Einstellen der Integrationszeit bzw. das Zusammenschalten der Fotodetektoren für eine oder mehrere nachfolgende Zeilen noch exakter auszugestalten. Dies ist z. B. dann möglich, wenn zusätzlich oder alternativ Unterschiede zwischen der Generierung von Elektronen bei den Pixeln zweier benachbarter Zeilen mit einbezogen werden. Bei der Kurve K der Fig. 7 ist beispielsweise beim Erzeugen der Elektronen des Pixels der Zeilen 5 und 6 ein vergleichsweise großer Unterschied feststellbar. Die Anzahl der generierten Elektronen hat in der Zeile 6 im Vergleich zur Zeile 5 stark abgenommen. Das Steuermittel kann nun davon ausgehen, dass eine weitere Reduzierung der generierten Elektronen beim Auslesen des Pixels der Zeile 7 erfolgen könnte. Es ist daher möglich, bereits für das Auslesen der Zeile 7 die längere, zweite Integrationszeit oder das Zusammenschalten von einem oder mehreren Fotodetektor(en) durchzuführen. Somit kann der Gradient der Anzahl der generierten Elektronen der Pixel benachbarter Zeilen vorteilhaft mit herangezogen werden.

Ähnliches gilt für die Zeile 36. Beim Auslesen des Pixels der Zeile 35 wird eine wesentlich höhere Anzahl von Elektronen generiert, als beim Auslesen des Pixels der Zeile 34. Diese Änderung in der Anzahl der generierten Elektronen bei zwei benachbarten Zeilen kann z. B. über einen weiteren Schwellwert überwacht werden. Da beispielsweise aufgrund der starken Änderung beim Generieren von Elektronen zwischen der Zeile 34 und 35 zu erwarten ist, dass beim Auslesen der Zeile 36 die Schwelle S1 überschritten wird, schaltet das Empfangsmittel bereits beim Auslesen der Zeile 36 die kürzere, erste Integrationszeit ein. Zusätzlich oder alternativ kann eine zuvor vorgenommene Zusammenschaltung von Fotodetektoren für das Auslesen der Zeile 36 rückgängig gemacht werden.

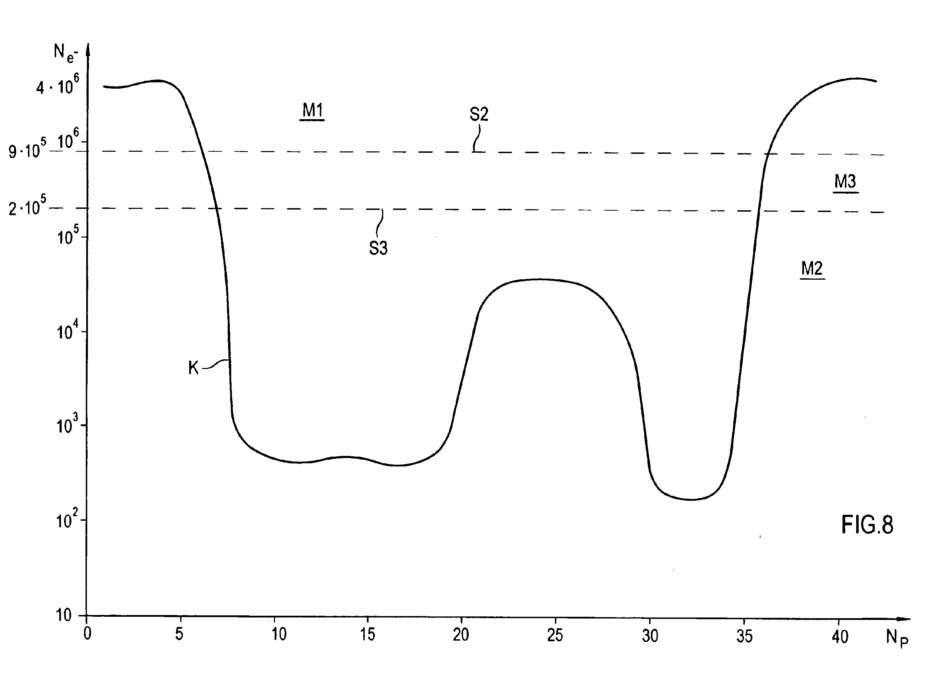

Die Fig. 8 zeigt ein zweites Beispiel der Messreihe K. Anstelle eines einzigen Schwellwertes sind hier zwei Schwellwerte vorgesehen. Die Fig. 8 zeigt einen zweiten, oberen Schwellwert S2, der in etwa bei einer Elektronenanzahl von 9x10⁵ festgelegt ist. Des Weiteren ist ein dritter, unterer Schwellwert S3 vorgesehen, der in etwa bei einer Elektronenanzahl von 2x10⁵ festgelegt ist. Oberhalb des Schwellwertes S2 liegt der Modus M1 und unterhalb des Schwellwertes S3 der Modus M2 vor. Zwischen dem Schwellwert S2 und dem Schwellwert S3 befindet sich ein dritter Modus M3. Durch diese Schwellwertsetzung kann eine Art Hysterese beim Einstellen der Integrationszeit oder dem Zusammenschalten von Fotodetektoren festgelegt werden. Im Modus M3 kann das Steuermittel 13 sowohl das Verhalten gemäß Modus M1 als auch gemäß Modus M2 einstellen. Dies hängt davon ab, ob vorher der Modus M1 oder der Modus M2 vorlag. Dies bedeutet, dass das Detektionsmittel 12, das sich in dem ersten Modus M1 befindet, in dem eine kurze, erste Integrationszeit eingestellt und/oder kein Zusammenschalten von Fotodetektoren vorgenommen wurde, beim Unterschreiten des Schwellwertes S2 nicht direkt in den zweiten Modus M2 umgeschaltet wird. Im Modus M2 wird von dem Steuermittel die lange, zweite Integrationszeit eingestellt und/oder ein oder mehrere Fotodetektor(en) zusammengeschaltet. Das Unterschreiten der Schwelle S2 beim Auslesen des Pixels der Zeile 6 bewirkt hier noch kein Umschalten des Detektionsmittels in den Modus M2. Dies erfolgt erst dann, wenn die Anzahl der Elektronen beim Auslesen des Pixels einer Zeile die Schwelle S3 unterschreitet. Dies ist hier beim Auslesen des Pixels der Zeile 7 der Fall. Für das Auslesen des Pixels der Zeile 8 wird daher in den Modus M2 geschaltet.

Ähnliches erfolgt beim Umschalten des Detektionsmittels vom Modus M2 in den Modus M1. Befindet sich das Detektionsmittel 12 im Modus M2, so wird ein Überschreiten des Schwellwertes S3 beim Generieren von Elektronen nicht ein Umschalten in den Modus M1 bewirken. Dies ist gemäß der Kurve K der Fig. 8 beispielsweise bei dem Pixel der Zeile 36 der Fall. Hier wurde die Schwelle S3 überschritten, die Schwelle S2 allerdings nicht. Das Detektionsmittel befindet sich weiterhin in dem Modus M2. Erst beim Auslesen des Pixels der Zeile 37 wird auch die Schwelle S2 überschritten. Dies hat zur Folge, dass vor dem Auslesen des Pixels der Zeile 38 in den Modus M1 umgeschaltet wird. Auch die Vorgehensweise mit zwei Schwellwerten, wie sie anhand des Ausführungsbeispiels der Fig. 8 beschrieben wurde, kann- wie bereits im Zusammenhang mit der Fig. 7 beschrieben - aufgrund des Unterschiedes bei der Generierung von Elektronen zwischen den Pixeln zwei benachbarten Zeilen durchgeführt werden.

Es ist möglich, das Umschalten von einem Modus in den anderen Modus in dem Steuermittel 13 kenntlich zu machen. Dies kann beispielsweise durch ein Setzen eines bestimmten Flags innerhalb der Ablaufsteuerung des Steuermittels 13 erfolgen. Dadurch kann einer dem Auslesen der Informationen nachfolgenden Bildverarbeitung in dem Steuermittel 13 der Moduswechsel angezeigt werden. Das Flag kann zur Nachbearbeitung der ausgelesen Bildinformationen eingesetzt werden, die beispielsweise eine bei der Umschaltung erfolgte Auflösungsänderung verarbeitet.

## Patentansprüche

1. Vorrichtung zum Auslesen von in einem Speicherleuchtstoff (15) abgespeicherten Informationen mit einem Detektionsmittel (12) zum Detektieren von von dem Speicherleuchtstoff (15) ausgebbarer Emissionsstrahlung (17), wobei das Detektionsmittel (12) eine Vielzahl von strahlungsempfindlichen Flächen (18; PD1-PDn) aufweist, mit denen während einer vorgebbaren Integrationszeit Emissionsstrahlung (17) empfangbar ist, **dadurch gekennzeichnet, dass** die Vorrichtung ein Steuermittel (13) zum Einstellen der Integrationszeit in Abhängigkeit von einer Menge zuvor empfangener Emissionsstrahlung (17) aufweist, wobei die Integrationzeit während des Auslesens der in dem Speicherleuchtstoff (15) abgespeicherten Informationen in Abhängigkeit von der von einer oder mehreren zuvor während desselben Auslesens der in dem Speicherleuchtstoff (15) abgespeicherten Informationen ausgelesenen Zeilen des Speicherleuchtstoffes (15) ausgegebenen Emissionsstrahlung eingestellt wird.

2. Vorrichtung nach Anspruch 1, **dadurch gekennzeichnet, dass** das Steuermittel (13) einen ersten Schwellwert (S1; S2) enthält, der einer vorgegebenen ersten Menge von Emissionsstrahlung (17) entspricht, und das Steuermittel (13) so ausgestaltet ist, dass es bei Detektieren einer solchen Menge Emissionsstrahlung (17), die größer ist als die dem ersten Schwellwert (S1; S2) entsprechende Menge, eine erste Integrationszeit und bei Detektieren einer solchen Menge Emissionsstrahlung (17), die kleiner ist als die dem ersten Schwellwert (S1; S2) entsprechende Menge, eine zweite Integrationszeit einstellt, wobei die erste Integrationszeit kürzer ist als die zweite Integrationszeit.

3. Vorrichtung nach Anspruch 2, **dadurch gekennzeichnet, dass** das Steuermittel (13) einen zweiten Schwellwert (S3) enthält, der einer vorgegebenen zweiten Menge von Emissionsstrahlung (17) entspricht, die kleiner ist als die erste Menge von Emissionsstrahlung (17), und das Steuermittel (13) so ausgestaltet ist, dass es bei eingestellter erster Integrationszeit und bei Detektieren einer solchen Menge von Emissionsstrahlung (17), die kleiner ist als der zweite Schwellwert (S3), die zweite Integrationszeit einstellt.

4. Vorrichtung zum Auslesen von in einem Speicherleuchtstoff (15) abgespeicherten Informationen mit einem Detektionsmittel (12) zum Detektieren von von dem Speicherleuchtstoff (15) ausgebbarer Emissionsstrahlung (17), wobei das Detektionsmittel (12) eine Vielzahl von strahlungsempfindlichen Flächen (18; PD1-PDn) aufweist und so ausgestaltet ist, dass es elektrische Signale (20-26) mit Angaben über von den strahlungsempfindlichen Flächen (18; PD1-PDn) empfangene Mengen von Emissionsstrahlung (17) erzeugt, **dadurch gekennzeichnet, dass** die Vorrichtung ein Steuermittel (13) zum Zusammenschalten mehrerer der strahlungsempfindlichen Flächen (18; PD1-PDn) in Abhängigkeit von einer Menge zuvor empfangener Emissionsstrahlung (17) aufweist, so dass gemeinsam für die zusammengeschalteten strahlungsempfindlichen Flächen (18; PD1-PDn) ein elektrisches Signal (28-30) mit Angaben über von den mehreren zusammengeschalteten strahlungsempfindlichen Flächen (18; PD1-PDn) zusammen empfangenen Mengen von Emissionsstrahlung (17) erzeugbar ist, wobei die strahlungsempfindlichen Flächen (18; PD1-PDn) während des Auslesens der in dem Speicherleuchtstoff (15) abgespeicherten Informationen in Abhängigkeit von der von einer oder mehreren zuvor während desselben Auslesens der in dem Speicherleuchtstoff (15) abgespeicherten Informationen ausgelesenen Zeilen des Speicherleuchtstoffes (15) ausgegebenen Emissionsstrahlung zusammengeschaltet werden.

5. Vorrichtung nach Anspruch 4, **dadurch gekennzeichnet, dass** das Steuermittel (13) einen ersten Schwellwert (S1; S2) enthält, der einer vorgegebenen ersten Menge von Emissionsstrahlung (17) entspricht, und das Steuermittel (13) so ausgestaltet ist, dass es bei Detektieren einer solchen Menge Emissionsstrahlung (17), die kleiner ist als die dem ersten Schwellwert (S1; S2) entsprechende Menge, eine erste Anzahl N₁, mit N₁>1, von strahlungsempfindlichen Flächen (18; PD1-PDn) zusammenschaltet.

6. Vorrichtung nach Anspruch 5, **dadurch gekennzeichnet, dass** das Steuermittel (13) so ausgestaltet ist, dass es bei Detektieren einer solchen Menge Emissionsstrahlung (17), die größer ist als die dem ersten Schwellwert (S1; S2) entsprechende Menge, eine zweite Anzahl N₂, mit 1≤N₂<N₁, von strahlungsempfindlichen Flächen (18; PD1-PDn) zusammenschaltet.

7. Vorrichtung nach Anspruch 6, **dadurch gekennzeichnet, dass** das Steuermittel (13) einen zweiten Schwellwert (S3) enthält, der einer vorgegebenen zweiten Menge von Emissionsstrahlung (17) entspricht, die kleiner ist als die erste Menge von Emissionsstrahlung (17), und das Steuermittel (13) so ausgestaltet ist, dass es bei zusammengeschalteter zweiter Anzahl N₂ und bei Detektieren einer solchen Menge von Emissionsstrahlung (17), die kleiner ist als der zweite Schwellwert (S3), die erste Anzahl N₁ zusammenschaltet.

8. Vorrichtung nach einem der Ansprüche 4 bis 7, **dadurch gekennzeichnet, dass** sie zusätzlich nach einem der Ansprüche 1 bis 3 ausgestaltet ist.

9. Vorrichtung nach einem der vorhergehenden Ansprüche, **dadurch gekennzeichnet, dass** die strahlungsempfindlichen Flächen (18; PD1-PDn) zum zeilenweisen Auslesen des Speicherleuchtstoffes (15) zeilenförmig nebeneinander angeordnet sind.

10. Vorrichtung nach Anspruch 9, **dadurch gekennzeichnet, dass** das Steuermittel (13) das Einstellen der Integrationszeit oder das Zusammenschalten mehrerer der strahlungsempfindlichen Flächen (18; PD1-PDn) zeilenweise vornimmt.

11. Vorrichtung nach einem der vorhergehenden Ansprüche, **dadurch gekennzeichnet, dass** sich die zuvor empfangene Menge von Emissionsstrahlung (17) auf die von einer der strahlungsempfindlichen Flächen (18; PD1-PDn) empfangene Menge von Emissionsstrahlung (17) beim Auslesen einer Zeile des Speicherleuchtstoffes (15) bezieht.

12. Vorrichtung nach einem der vorhergehenden Ansprüche, **dadurch gekennzeichnet, dass** sich die zuvor empfangene Menge von Emissionsstrahlung (17) auf die von mehreren der strahlungsempfindlichen Flächen (18; PD1-PDn) empfangenen Mengen von Emissionsstrahlung (17) beim Auslesen einer Zeile des Speicherleuchtstoffes (15) bezieht.

13. Vorrichtung nach Anspruch 12, **dadurch gekennzeichnet, dass** das Steuermittel (13) den Unterschied zwischen den von wenigstens zwei benachbarten strahlungsempfindlichen Flächen (18; PD1-PDn) empfangenen Mengen von Emissionsstrahlung (17) beim Auslesen einer Zeile des Speicherleuchtstoffes (15) berücksichtigt.

14. Vorrichtung nach einem der vorhergehenden Ansprüche, **dadurch gekennzeichnet, dass** sich die zuvor empfangene Menge von Emissionsstrahlung (17) auf die von einer oder mehreren der strahlungsempfindlichen Flächen (18; PD1-PDn) empfangenen Mengen von Emissionsstrahlung (17) beim Auslesen mehrerer Zeilen des Speicherleuchtstoffes (15) bezieht.

15. Vorrichtung nach Anspruch 14, **dadurch gekennzeichnet, dass** das Steuermittel (13) den Unterschied zwischen der von einer der strahlungsempfindlichen Flächen (18; PD1-PDn) empfangenen Menge von Emissionsstrahlung (17) beim Auslesen einer ersten Zeile des Speicherleuchtstoffes (15) und der von der gleichen strahlungsempfindlichen Fläche (18; PD1-PDn) zuvor empfangenen Menge von Emissionsstrahlung (17) beim vorhergehenden Auslesen einer zweiten Zeile des Speicherleuchtstoffes (15) berücksichtigt.

16. Vorrichtung nach einem der vorhergehenden Ansprüche, **dadurch gekennzeichnet, dass** sie ein Antriebsmittel (19) zum Erzeugen einer Relativbewegung zwischen dem Detektionsmittel (12) und dem Speicherleuchtstoff (15) aufweist, so dass eine Vorschubrichtung (A) zum Auslesen des Speicherleuchtstoffes (15) erzeugbar ist.

17. Vorrichtung nach Anspruch 16, **dadurch gekennzeichnet, dass** das Antriebsmittel (19) so ausgestaltet ist, dass es das Detektionsmittel (12) über den Speicherleuchtstoff (15) transportiert.

18. Vorrichtung nach einem der vorhergehenden Ansprüche, **dadurch gekennzeichnet, dass** die strahlungsempfindlichen Flächen (18; PD1-PDn) jeweils in Zeilenrichtung (B) eine erste Ausdehnung (Y_{CCD}) und in Vorschubrichtung (A) eine zweite Ausdehnung (X_{CCD}) haben, wobei die erste Ausdehnung (Y_{CCD}) und die zweite Ausdehnung (X_{CCD}) ungleich sind.

19. Vorrichtung nach Anspruch 18, **dadurch gekennzeichnet, dass** die erste Ausdehnung (Y_{CCD}) kleiner ist als die zweite Ausdehnung (X_{CCD}).

20. Vorrichtung nach einem der vorhergehenden Ansprüche, **dadurch gekennzeichnet, dass** sie eine Vorrichtung zum Auslesen von in dem Speicherleuchtstoff (15) durch Röntgenbestrahlung abgespeicherten Röntgeninformationen ist.

21. Vorrichtung nach einem der vorhergehenden Ansprüche, **dadurch gekennzeichnet, dass** das Detektionsmittel (12) so ausgestaltet ist, dass es eine im wesentlichen unmittelbar nach dem Abspeichern der Informationen vom Speicherleuchtstoff (15) ausgegebene Emissionsstrahlung (17) detektiert und das Steuermittel (13) so ausgestaltet ist, dass es abhängig von der Menge dieser detektierten Emissionsstrahlung (17) die Integrationszeit einstellt oder die strahlungsempfindlichen Flächen (18; PD1-PDn) zusammenschaltet.

22. Vorrichtung nach einem der vorhergehenden Ansprüche, **dadurch gekennzeichnet, dass** das Steuermittel (13) so ausgestaltet ist, dass es vor dem Auslesen des Speicherleuchtstoffes (15) die erste Integrationszeit einstellt oder die zweite Anzahl N₂ von strahlungsempfindlichen Flächen (18; PD1-PDn) zusammenschaltet.

23. Verfahren zum Auslesen von in einem Speicherleuchtstoff (15) abgespeicherten Informationen, bei dem von dem Speicherleuchtstoff (15) ausgegebene Emissionsstrahlung (17) von einer Vielzahl von strahlungsempfindlichen Flächen (18; PD1-PDn) während einer vorgegebenen Integrationszeit empfangen wird, **dadurch gekennzeichnet, dass** die Integrationszeit in Abhängigkeit von einer Menge zuvor empfangener Emissionsstrahlung (17) eingestellt wird, wobei die Integrationzeit während des Auslesens der in dem Speicherleuchtstoff (15) abgespeicherten Informationen in Abhängigkeit von der von einer oder mehreren zuvor während desselben Auslesens der in dem Speicherleuchtstoff (15) abgespeicherten Informationen ausgelesenen Zeilen des Speicherleuchtstoffes (15) ausgegebenen Emissionsstrahlung eingestellt wird.

24. Verfahren zum Auslesen von in einem Speicherleuchtstoff (15) abgespeicherten Informationen, bei dem von dem Speicherleuchtstoff (15) ausgegebene Emissionsstrahlung (17) von einer Vielzahl von strahlungsempfindlichen Flächen (18; PD1-PDn) empfangen wird und elektrische Signale (20-26) mit Angaben über von den strahlungsempfindlichen Flächen (18; PD1-PDn) empfangene Mengen von Emissionsstrahlung (17) erzeugt werden, **dadurch gekennzeichnet, dass** mehrere der strahlungsempfindlichen Flächen (18; PD1-PDn) in Abhängigkeit von einer Menge zuvor empfangener Emissionsstrahlung (17) zusammengeschaltet werden, und gemeinsam für die zusammengeschalteten strahlungsempfindlichen Flächen (18; PD1-PDn) ein elektrisches Signal (28-30) mit Angaben über von den mehreren zusammengeschalteten strahlungsempfindlichen Flächen (18; PD1-PDn) zusammen empfangenen Mengen von Emissionsstrahlung (17) erzeugt wird wobei die strahlungsempfindlichen Flächen (18; PD1-PDn) während des Auslesens der in dem Speicherleuchtstoff (15) abgespeicherten Informationen in Abhängigkeit von der von einer oder mehreren zuvor während desselben Auslesens der in dem Speicherleuchtstoff (15) abgespeicherten Informationen ausgelesenen Zeilen des Speicherleuchtstoffes (15) ausgegebenen Emissionsstrahlung zusammengeschaltet werden.

## Claims

1. A device for reading out information stored in a storage phosphor (15) comprising a detecting means (12) for detecting emission radiation (17) which can be emitted by the storage phosphor (15), the detecting means (12) having a plurality of radiation-sensitive surfaces (18; PD1-PDn) by means of which emission radiation (17) can be received during an integration time which can be preset, **characterised in that** the device has a controlling means (13) for setting the integration time as a function of an amount of emission radiation (17) previously received, the integration time during the readout of the information stored in the storage phosphor (15) being set as a function of the emission radiation emitted by one or more lines of the storage phosphor (15) previously read out during the same readout of the information stored in the storage phosphor (15).

2. The device according to claim 1, wherein the controlling means (13) contains a first threshold value (S1; S2) corresponding to a preset first amount of emission radiation (17) and the controlling means (13) is configured in such a way that it sets a first integration time when detecting an amount of emission radiation (17) that is greater than the amount corresponding to the first threshold value (S1; S2) and that it sets a second integration time when detecting an amount of emission radiation (17) which is smaller than the amount corresponding to the first threshold value (S1; S2), the first integration time being shorter than the second integration time.

3. The device according to claim 2, wherein the controlling means (13) contains a second threshold value (S3) corresponding to a preset second amount of emission radiation (17), which is smaller than the first amount of emission radiation (17), and the controlling means (13) is configured in such a way that it sets the second integration time for a set first integration time and when detecting an amount of emission radiation (17) which is smaller than the second threshold value (S3).

4. A device for reading out information stored in a storage phosphor (15) comprising a detecting means (12) for detecting emission radiation (17) which can be emitted by the storage phosphor (15), the detecting means (12) having a plurality of radiation-sensitive surfaces (18; PD1-PDn) and being configured in such a way that it generates electrical signals (20-26) indicative of the amounts of emission radiation (17) received by the radiation-sensitive surfaces (18; PD1-PDn), **characterised in that** the device has a controlling means (13) for interconnecting several radiation-sensitive surfaces (18; PD1-PDn) as a function of an amount of emission radiation (17) previously received, so that in common for the interconnected radiation-sensitive surfaces (18; PD1-PDn) an electrical signal (28-30) indicative of the amounts of emission radiation (17) received by the several interconnected radiation-sensitive surfaces (18; PD1-PDn) together can be generated, the radiation-sensitive surfaces (18; PD1-PDn) being interconnected during the readout of the information stored in the storage phosphor (15) as a function of the emission radiation emitted by one or more lines of the storage phosphor (15) previously read out during the same readout of the information stored in the storage phosphor (15).

5. The device according to claim 4, wherein the controlling means (13) contains a first threshold value (S1; S2) corresponding to a preset first amount of emission radiation (17) and the controlling means (13) is configured in such a way that it interconnects a first number N₁, wherein N₁ > 1, of radiation-sensitive surfaces (18; PD1-PDn) when detecting an amount of emission radiation (17) which is smaller than the amount corresponding to the first threshold value (S1; S2).

6. The device according to claim 5, wherein the controlling means (13) is configured in such a way that it interconnects a second number N₂, wherein 1 ≤ N₂ < N₁, of radiation-sensitive surfaces (18; PD1-PDn) when detecting an amount of emission radiation (17) which is greater than the amount corresponding to the first threshold value (S1; S2).

7. The device according to claim 6, wherein the controlling means (13) contains a second threshold value (S3) corresponding to a preset second amount of emission radiation (17), which is smaller than the first amount of emission radiation (17), and the controlling means (13) is configured in such a way that it interconnects the first number N₁ when the second number N₂ has been interconnected and when an amount of emission radiation (17) is detected which is smaller than the second threshold value (S3).

8. The device according to any of the claims 4 to 7, further being configured in accordance with any of the claims 1 to 3.

9. The device according to any of the preceding claims, wherein the radiation-sensitive surfaces (18; PD1-PDn) for the line-by-line readout of the storage phosphor (15) are arranged linearly next to each other.

10. The device according to claim 9, wherein the controlling means (13) performs the setting of the integration time or the interconnecting of several radiation-sensitive surfaces (18; PD1-PDn) line by line.

11. The device according to any of the preceding claims, wherein the amount of emission radiation (17) previously received relates to the amount of emission radiation (17) received by one of the radiation-sensitive surfaces (18; PD1-PDn) when reading out a line of the storage phosphor (15).

12. The device according to any of the preceding claims, wherein the amount of emission radiation (17) previously received relates to the amounts of emission radiation (17) received by more than one of the radiation-sensitive surfaces (18; PD1-PDn) when reading out a line of the storage phosphor (15).

13. The device according to claim 12, wherein the controlling means (13) takes the difference between the amounts of emission radiation (17) received by at least two adjacent radiation-sensitive surfaces (18; PD1-PDn) when reading out a line of the storage phosphor (15) into account.

14. The device according to any of the preceding claims, wherein the amount of emission radiation (17) previously received relates to the amounts of emission radiation (17) received by one or more radiation-sensitive surface (18; PD1-PDn) when reading out several lines of the storage phosphor (15).

15. The device according to claim 14, wherein the controlling means (13) takes the difference between the amount of emission radiation (17) received by one of the radiation-sensitive surfaces (18; PD1-PDn) when reading out a first line of the storage phosphor (15) and the amount of emission radiation (17) previously received by the same radiation-sensitive surface (18; PD1-PDn) during the preceding readout of a second line of the storage phosphor (15) into account.

16. The device according to any of the preceding claims, further having a drive mechanism (19) for generating a relative movement between the detecting means (12) and the storage phosphor (15), so that an advance direction (A) for the readout of the storage phosphor (15) can be generated.

17. The device according to claim 16, wherein the drive mechanism (19) is configured in such a way that it transports the detecting means (12) across the storage phosphor (15).

18. The device according to any of the preceding claims, wherein the radiation-sensitive surfaces (18; PD1-PDn) each have a first dimension (Y_{CCD}) in the line direction (B) and a second dimension (X_{CCD}) in the advance direction (A), the first dimension (Y_{CCD}) and the second dimension (X_{CCD}) not being equal.

19. The device according to claim 18, wherein the first dimension (Y_{CCD}) is smaller than the second dimension (X_{CCD}).

20. The device according to any of the preceding claims, being a device for reading out X-ray information stored in the storage phosphor (15) by means of exposure to X-rays.

21. The device according to any of the preceding claims, wherein the detecting means (12) is configured in such a way that it detects an emission radiation (17) emitted by the storage phosphor (15) substantially immediately after the storage of the information and the controlling means (13) is configured in such a way that it sets the integration time or interconnects the radiation-sensitive surfaces (18; PD1-PDn) as a function of the amount of said detected emission radiation (17).

22. The device according to any of the preceding claims, wherein the controlling means (13) is configured in such a way that it sets the first integration time or interconnects the second number N₂ of radiation-sensitive surfaces (18; PD1-PDn) before the readout of the storage phosphor (15).

23. A method for reading out information stored in a storage phosphor (15), wherein emission radiation (17) emitted by the storage phosphor (15) is received by a plurality of radiation-sensitive surfaces (18; PD1-PDn) during a preset integration time, **characterised in that** the integration time is set as a function of an amount of emission radiation (17) previously received, the integration time during the readout of the information stored in the storage phosphor (15) being set as a function of the emission radiation emitted by one or more lines of the storage phosphor (15) previously read out during the same readout of the information stored in the storage phosphor (15).

24. A method for reading out information stored in a storage phosphor (15), wherein emission radiation (17) emitted by the storage phosphor (15) is received by a plurality of radiation-sensitive surfaces (18; PD1-PDn) and electrical signals (20-26) indicative of amounts of emission radiation (17) received by the radiation-sensitive surfaces (18; PD1-PDn) are generated, **characterised in that** several radiation-sensitive surfaces (18; PD1-PDn) are interconnected as a function of an amount of emission radiation (17) previously received and in common for the interconnected radiation-sensitive surfaces (18; PD1-PDn) an electrical signal (28-30) indicative of amounts of emission radiation (17) received by the several interconnected radiation-sensitive surfaces (18; PD1-PDn) together is generated, the radiation-sensitive surfaces (18; PD1-PDn) being interconnected during the readout of the information stored in the storage phosphor (15) as a function of the emission radiation emitted by one or more lines of the storage phosphor (15) previously read out during the same readout of the information stored in the storage phosphor (15).

## Revendications

1. Dispositif pour la lecture d'informations stockées dans une substance luminescente accumulatrice (15), comportant un moyen détecteur (12) conçu pour détecter un rayonnement d'émission (17) pouvant être délivré par ladite substance luminescente accumulatrice (15), ledit moyen détecteur (12) offrant une pluralité de surfaces (18; PD1-PDn) sensibles aux rayonnements, par lesquelles un rayonnement d'émission (17) peut être reçu durant un temps d'intégration pouvant être préétabli, **caractérisé par le fait que** ledit dispositif présente un moyen de commande (13) pour régler le temps d'intégration en fonction d'une quantité de rayonnement d'émission (17) préalablement reçue, sachant que ledit temps d'intégration est réglé, au cours de la lecture des informations stockées dans la substance luminescente accumulatrice (15), en fonction du rayonnement d'émission délivré par une ou plusieurs ligne(s) de la substance luminescente accumulatrice (15), préalablement lue(s) au cours de la même lecture des informations stockées dans ladite substance luminescente accumulatrice.

2. Dispositif selon la revendication 1, **caractérisé par le fait que** le moyen de commande (13) renferme une première valeur de seuil (S1; S2) correspondant à une première quantité préétablie de rayonnement d'émission (17), et ledit moyen de commande (13) est conçu de façon telle qu'il règle un premier temps d'intégration lors de la détection d'une quantité de rayonnement d'émission (17) excédant la quantité correspondant à la première valeur de seuil (S1; S2) ; et règle un second temps d'intégration lors de la détection d'une quantité de rayonnement d'émission (17) inférieure à la quantité correspondant à ladite première valeur de seuil (S1; S2), le premier temps d'intégration étant plus court que le second temps d'intégration.

3. Dispositif selon la revendication 2, **caractérisé par le fait que** le moyen de commande (13) renferme une seconde valeur de seuil (S3) correspondant à une seconde quantité préétablie de rayonnement d'émission (17) qui est inférieure à la première quantité de rayonnement d'émission (17), et ledit moyen de commande (13) est conçu de façon telle qu'il règle le second temps d'intégration à l'état réglé du premier temps d'intégration et lors de la détection d'une quantité de rayonnement d'émission (17) qui est inférieure à ladite seconde valeur de seuil (S3).

4. Dispositif pour la lecture d'informations stockées dans une substance luminescente accumulatrice (15), comportant un moyen détecteur (12) conçu pour détecter un rayonnement d'émission (17) pouvant être délivré par ladite substance luminescente accumulatrice (15), ledit moyen détecteur (12) offrant une pluralité de surfaces (18 ; PD1-PDn) sensibles aux rayonnements, et étant conçu de façon telle qu'il engendre des signaux électriques (20-26) fournissant des indications relatives à des quantités de rayonnement d'émission (17) reçues par lesdites surfaces (18 ; PD1-PDn) sensibles aux rayonnements, **caractérisé par le fait que** ledit dispositif présente un moyen de commande (13) affecté à la connexion regroupée de plusieurs, parmi les surfaces (18 ; PD1-PDn) sensibles aux rayonnements, en fonction d'une quantité de rayonnement d'émission (17) préalablement reçue, ce qui autorise la génération conjointe, pour lesdites surfaces (18 ; PD1-PDn) sensibles aux rayonnements, à connexion regroupée, d'un signal électrique (28-30) fournissant des indications relatives à des quantités de rayonnement d'émission (17) conjointement reçues par lesdites multiples surfaces (18 ; PD1-PDn) sensibles aux rayonnements, à connexion regroupée, sachant que lesdites surfaces (18 ; PD1-PDn) sensibles aux rayonnements sont connectées ensemble, au cours de la lecture des informations stockées dans la substance luminescente accumulatrice (15), en fonction du rayonnement d'émission délivré par une ou plusieurs ligne(s) de ladite substance luminescente accumulatrice (15), préalablement lue(s) au cours de la même lecture des informations stockées dans ladite substance luminescente accumulatrice (15).

5. Dispositif selon la revendication 4, **caractérisé par le fait que** le moyen de commande (13) renferme une première valeur de seuil (S1; S2) correspondant à une première quantité préétablie de rayonnement d'émission (17), et ledit moyen de commande (13) est conçu de façon telle que, lors de la détection d'une quantité de rayonnement d'émission (17) inférieure à ladite première valeur de seuil (S1; S2), il provoque la connexion regroupée d'un premier nombre N₁ de surfaces (18 ; PD1-PDn) sensibles aux rayonnements, sachant que N₁ > 1.

6. Dispositif selon la revendication 5, **caractérisé par le fait que** le moyen de commande (13) est conçu de façon telle que, lors de la détection d'une quantité de rayonnement d'émission (17) excédant la quantité correspondant à la première valeur de seuil (S1 ; S2), il provoque la connexion regroupée d'un second nombre N₂ de surfaces (18 ; PD1-PDn) sensibles aux rayonnements, sachant que 1 ≤ N₂ < N₁.

7. Dispositif selon la revendication 6, **caractérisé par le fait que** le moyen de commande (13) renferme une seconde valeur de seuil (S3) correspondant à une seconde quantité préétablie de rayonnement d'émission (17) qui est inférieure à la première quantité de rayonnement d'émission (17), et ledit moyen de commande (13) est conçu de façon telle qu'il provoque la connexion regroupée du premier nombre N₁ à l'état de connexion regroupée du second nombre N₂, et lors de la détection d'une quantité de rayonnement d'émission (17) inférieure à ladite seconde valeur de seuil (S3).

8. Dispositif selon l'une des revendications 4 à 7, **caractérisé par le fait qu'**il est additionnellement conçu conformément à l'une des revendications 1 à 3.

9. Dispositif selon l'une des revendications précédentes, **caractérisé par le fait que** les surfaces (18 ; PD1-PDn) sensibles aux rayonnements sont agencées en juxtaposition, sous la forme de lignes, en vue de la lecture linéaire de la substance luminescente accumulatrice (15).

10. Dispositif selon la revendication 9, **caractérisé par le fait que** le moyen de commande (13) assure, en mode linéaire, le réglage du temps d'intégration ou la connexion regroupée de plusieurs, parmi les surfaces (18 ; PD1-PDn) sensibles aux rayonnements.

11. Dispositif selon l'une des revendications précédentes, **caractérisé par le fait que** la quantité de rayonnement d'émission (17), préalablement reçue, est en corrélation avec la quantité de rayonnement d'émission (17) reçue par l'une des surfaces (18 ; PD1-PDn) sensibles aux rayonnements lors de la lecture d'une ligne de la substance luminescente accumulatrice (15).

12. Dispositif selon l'une des revendications précédentes, **caractérisé par le fait que** la quantité de rayonnement d'émission (17), préalablement reçue, est en corrélation avec les quantités de rayonnement d'émission (17) reçues par plusieurs, parmi les surfaces (18 ; PD1-PDn) sensibles aux rayonnements lors de la lecture d'une ligne de la substance luminescente accumulatrice (15).

13. Dispositif selon la revendication 12, **caractérisé par le fait que** le moyen de commande (13) prend en compte, lors de la lecture d'une ligne de la substance luminescente accumulatrice (15), la différence entre les quantités de rayonnement d'émission (17) reçues par au moins deux surfaces voisines (18 ; PD1-PDn) sensibles aux rayonnements.

14. Dispositif selon l'une des revendications précédentes, **caractérisé par le fait que** la quantité de rayonnement d'émission (17), préalablement reçue, est en corrélation avec les quantités de rayonnement d'émission (17) reçues par une ou plusieurs des surfaces (18 ; PD1-PDn) sensibles aux rayonnements lors de la lecture de plusieurs lignes de la substance luminescente accumulatrice (15).

15. Dispositif selon la revendication 14, **caractérisé par le fait que** le moyen de commande (13) prend en compte la différence entre la quantité de rayonnement d'émission (17) reçue par l'une des surfaces (18 ; PD1-PDn) sensibles aux rayonnements, lors de la lecture d'une première ligne de la substance luminescente accumulatrice (15), et la quantité de rayonnement d'émission (17) préalablement reçue, par la même surface (18 ; PD1-PDn) sensible aux rayonnements, lors de la lecture précédente d'une seconde ligne de ladite substance luminescente accumulatrice (15).

16. Dispositif selon l'une des revendications précédentes, **caractérisé par le fait qu'**il comporte un moyen d'entraînement (19) pour engendrer un mouvement relatif entre le moyen détecteur (12) et la substance luminescente accumulatrice (15), ce qui permet de procurer une direction d'avance (A) en vue de la lecture de ladite substance luminescente accumulatrice (15).

17. Dispositif selon la revendication 16, **caractérisé par le fait que** le moyen d'entraînement (19) est conçu de manière telle qu'il achemine le moyen détecteur (12) au-dessus de la substance luminescente accumulatrice (15).

18. Dispositif selon l'une des revendications précédentes, **caractérisé par le fait que** les surfaces (18 ; PD1-PDn) sensibles aux rayonnements présentent, respectivement, une première étendue (Y_{CCD}) dans la direction (B) des lignes et une seconde étendue (X_{CCD}) dans la direction d'avance (A), la première étendue (Y_{CCD}) et la seconde étendue (X_{CCD}) n'étant pas identiques.

19. Dispositif selon la revendication 18, **caractérisé par le fait que** la première étendue (Y_{CCD}) est plus petite que la seconde étendue (X_{CCD}).

20. Dispositif selon l'une des revendications précédentes, **caractérisé par le fait qu'**il se présente comme un dispositif dédié à la lecture d'informations radiologiques stockées, par exposition aux rayons X, dans la substance luminescente accumulatrice (15).

21. Dispositif selon l'une des revendications précédentes, **caractérisé par le fait que** le moyen détecteur (12) est conçu de façon telle qu'il détecte un rayonnement d'émission (17) délivré, par la substance luminescente accumulatrice (15), pour l'essentiel directement après la mémorisation des informations; et le moyen de commande (13) est conçu de façon telle qu'il provoque, en fonction de la quantité de ce rayonnement d'émission (17) détecté, le réglage du temps d'intégration ou la connexion regroupée des surfaces (18 ; PD1-PDn) sensibles aux rayonnements.

22. Dispositif selon l'une des revendications précédentes, **caractérisé par le fait que** le moyen de commande (13) est conçu de façon telle qu'il provoque, préalablement à la lecture de la substance luminescente accumulatrice (15), le réglage du premier temps d'intégration ou la connexion regroupée du second nombre N₂ de surfaces (18 ; PD1-PDn) sensibles aux rayonnements.

23. Procédé pour la lecture d'informations stockées dans une substance luminescente accumulatrice (15), dans lequel un rayonnement d'émission (17) délivré par ladite substance luminescente accumulatrice (15) est reçu, pendant un temps d'intégration préétabli, par une pluralité de surfaces (18 ; PD1-PDn) sensibles aux rayonnements, **caractérisé par le fait que** ledit temps d'intégration est réglé en fonction d'une quantité de rayonnement d'émission (17) préalablement reçue, ledit temps d'intégration étant réglé, au cours de la lecture des informations stockées dans la substance luminescente accumulatrice (15), en fonction d'une ou plusieurs ligne(s) de ladite substance luminescente accumulatrice (15) lue(s), au préalable, durant la même lecture des informations stockées dans ladite substance luminescente accumulatrice (15).

24. Procédé pour la lecture d'informations stockées dans une substance luminescente accumulatrice (15), dans lequel un rayonnement d'émission (17), délivré par ladite substance luminescente accumulatrice (15), est reçu par une pluralité de surfaces (18 ; PD1-PDn) sensibles aux rayonnements, puis il est engendré des signaux électriques (20-26) fournissant des indications relatives à des quantités de rayonnement d'émission (17) reçues par lesdites surfaces (18; PD1-PDn) sensibles aux rayonnements, **caractérisé par le fait que** plusieurs, parmi lesdites surfaces (18 ; PD1-PDn) sensibles aux rayonnements, sont commutées ensemble en fonction d'une quantité de rayonnement d'émission (17) préalablement reçue et il est engendré conjointement, pour lesdites surfaces (18 ; PD1-PDn) sensibles aux rayonnements et commutées ensemble, un signal électrique (28-30) fournissant des indications relatives à des quantités de rayonnement d'émission (17) conjointement reçues par lesdites multiples surfaces (18 ; PD1-PDn) sensibles aux rayonnements et commutées ensemble, lesdites surfaces (18 ; PD1-PDn) sensibles aux rayonnements étant commutées ensemble, au cours de la lecture des informations stockées dans la substance luminescente accumulatrice (15), en fonction du rayonnement d'émission délivré par une ou plusieurs ligne(s) de la substance luminescente accumulatrice (15) lue(s), au préalable, durant la même lecture desdites informations stockées dans ladite substance luminescente accumulatrice (15).
